# EUROPEAN PATENT SPECIFICATION

(11) **EP 1 735 721 B1**
(45) Date of publication and mention of the grant of the patent: **27.04.2016**
(21) Application number: 05730800.9
(22) Date of filing: 22.03.2005
(51) Int. Cl.: G06F 17/30

(54) **MANAGING EVENT-CONDITION-ACTION RULES IN A DATABASE SYSTEM**
VERWALTUNG VON EREIGNIS-BEDINGUNG-AKTIONS-REGELN IN EINEM DATENBANKSYSTEM
GESTION DE REGLES D'EVENEMENT-CONDITIONS -ACTION DANS UN SYSTEME DE BASE DE DONNEES

(30) Priority: 30.03.2004 US 815220
(43) Date of publication of application: 27.12.2006
(73) Proprietor: Oracle International Corporation, Redwood Shores, CA 94065 (US)
(72) Inventor: YALAMANCHI, Aravind, Nashua, NH 03060 (US)
(74) Representative: Dendorfer, Claus
(86) International application number: PCT/US2005/009598
(87) International publication number: WO 2005/101252

(56) References cited:
- EP-A- 0 743 596
- WO-A-03/098479
- US-A- 5 446 885
- US-A1- 2003 212 657
- US-B1- 6 427 146
- US-B1- 6 604 093
- NORMAN W. PATON ET. AL: "Active database systems" ACM COMPUTING SURVEYS (CSUR), [Online] vol. 31, no. 1, March 1999 (1999-03), pages 63-103, XP002354519 New York, NY, USA ISSN: 0360-0300 Retrieved from the Internet: URL:http://delivery.acm.org/10.1145/320000 /311623/p63-paton.pdf?key1=311623&key2=874 3222311&coll=portal&dl=ACM&CFID=2181828&CF TOKEN=68827537> [retrieved on 2005-11-17]
- BENJAMIN N. GROSOF ET.AL: "SweetDeal: representing agent contracts with exceptions using XML rules, ontologies, and process descriptions" PROCEEDINGS OF THE 12TH INTERNATIONAL CONFERENCE ON WORLD WIDE WEB, [Online] 20 May 2003 (2003-05-20), - 24 May 2003 (2003-05-24) pages 340-349, XP002354520 Budapest, Hungary ISBN: 1-58113-680-3 Retrieved from the Internet: URL:http://delivery.acm.org/10.1145/780000 /775200/p340-grosof.pdf?key1=775200&key2=9 474222311&coll=portal&dl=ACM&CFID=2181828& CFTOKEN=68827537> [retrieved on 2005-11-17]
- MOLINA H. ET AL: "DATABASE SYSTEMS The Complete Book", 2002, PRENTICE HALL, USA ISBN: 0-13-098043-9 * page 315 - page 348 *
- ZECONG SONG: 'A GENERALIZED METHOD TO EXTENDING THE ACTIVE CAPABILITY OF RELATIONAL DATABASE SYSTEMS' THESIS, [Online] 01 January 2000, XP055168141 Retrieved from the Internet: <URL:http://itlab.uta.edu/sharma/PPL/Thesis Web/zsong_thesis.pdf> [retrieved on 2015-02-06]

## Description

### CROSS REFERENCE TO RELATED APPLICATIONS

This application is related to U.S. Patent Application No. 10/254,383 entitled "Managing Expressions In A Database System," filed on September 24, 2002 and published as US-2003-0212670-A1; is related to U.S. Patent Application No. 10/365,771 entitled "Managing XPATH Expressions In A Database System," filed on February 12, 2003; and is related to U.S. Patent Application No. 10/418,882 entitled "Extensible Rules Engine In A Database Management System," filed on April 17, 2003 and published as US-2003-0212657-A.

### FIELD OF THE INV ENTION

The present invention relates generally to database systems and, more specifically, to techniques for managing event-condition-action expressions in database systems,

### BACKGROUND OF THE INVENTION

### RULES ENGINES

Rules are typically used in business applications to guide or influence the business behavior in real-time. A majority of these applications need event-centric rules to monitor the creation of new business objects or some state changes in the business processes. An example of an event-centric rule, in the context of the travel business, is as follows: if a party reserves an airline ticket to Orlando and reserves a luxury car, offer a promotional discount to a particular Orlando hotel. Hence, upon the occurrence of the two events, the application would automatically offer the promotion to the party.

In the context of rules engines, rules are broadly divided into two classes: (1) deductive or inference rules; and (2) reactive or Event-Condition-Action (ECA) rules. The deductive rules use forward and backward reasoning to infer or deduce facts from existing knowledge bases. The ECA rules are well suited for event-centric problems, which deal with a state change and how to manage it.

Existing commercial rules engine applications act as repositories for business rules and facilitate the separation of the business logic from the application logic. Rules engines define some rule languages to allow declarative specification of rules and some interfaces to allow applications to interact with the rules engine. However, the types of rules managed by such engines are deductive in nature.

Some forms of ECA rules can be formulated as deductive rules and can be managed by rules engines that are designed for deductive rules. However, due to the differences in workloads between processing the deductive rules and the ECA rules, a rules engine designed for deductive rules is not effective for managing ECA rules, for the following reasons. Most deductive rules engines use variants of RETE indexes to process a set of rules for a set of facts. These indexes are purely memory-based and they do not scale well for large sets of rules defined for large sets of facts. Also, these indexes are not efficient for highly dynamic facts, which are typical of the events specified in the ECA rules. Furthermore, in a multi-tiered environment, the memory-based rules engines reside in the application layer. Hence, if business events for which the rules are defined are in the database layer, these events need to be fetched into the application layer in order to process the corresponding rules, which degrades the performance of such rules engines.

U.S. Patent No. 6,427,146 discloses a database event detection and notifcation system including a rule definer for defining high-level rules, which can include conceptual terms (e.g., bad, heavy) and approximate operators (e.g., similar, near-by). The high-level (i.e., English-like) rules are converted into low level rules by a rule converter, including translation of conceptual terms and approximate operators.

U.S. Patent No. 5,446,885 discloses a rule-based application structure that utilizes calculation rules comprising objects and simple mathematical and logical operators.

WO 03/098479 A2 discloses storing conditional expressions in a column of a database table and evaluating, by a database server, such conditional expressions against queries that specify certain criteria.

U.S. Patent No. 6,604,093 discloses a method,for situation management in which a composite event is specified as a combination of two or more predefined component events, and a rule is defined which causes a reaction to be invoked upon an occurrence of the composite event subject to a given condition.

EP 0 743 596 A2 is set in the context of active computer based systems that have sets of rules that execute upon the occurrence of particular events when specified condition predicates are satisfied. The document discloses a method to control the interaction and execution of multiple rules that are triggered by the same condition.

The article "Active database systems" by Norman W. Paton et al., ACM COMPUTING SURVEYS, vol. 31, no. 1, March 1999, pages 63-103, describes database systems that support mechanisms that enable them to respond automatically to events that are taking place either inside or outside the database system.

The article "SweetDeal: Representing agent contracts with exceptions using XML rules, ontologies, and process descriptions" by Benjamin N. Grosof, PROCEEDINGS OF THE 12TH INTERNATIONAL CONFERENCE ON WORLD WIDE WEB, May 2003, pages 340-349, discloses a rule-based approach to representation of business contracts that enables software agents to create, evaluate, negotiate, and execute contracts. The approach is extended by also incorporating process knowledge descriptions, thereby enabling more complex contracts with behavioral provisions, especially for handling exception conditions (e.g., late delivery or non-payment) that might arise during the execution of the contract.

Pages 315 - 348 of the book "DATABASE SYSTEMS - The Complete Book" by Hector Garcia-Molina et al., PRENTICE HALL, 2002, describes event-condition-action rules and the SQL trigger statement, including the various options that the SQL trigger statement provides in the event, condition and action parts.

The thesis "A generalized method to extending the active capability of relational database systems" by Zecong Song, University of Florida, XP55168141, describes a program called "ECA Agent" that acts as middleware between a database server and a plurality of clients. The database server includes certain active capabilities by allowing the definition of triggers that respond to insert, delete and update events on a particular table. The middleware program extends these capabilities to allow the detection of composite events.

US 2003/0212657 A1 discloses an extensible rules engine that uses database technology and provides a rules evaluation service for applications external to the database server or database management system.

### SUMMARY OF THE INVENTION

The invention is defined by the independent claims. The dependent claims concern optional features of some embodiments of the invention.

### BRIEF DESCRIPTION OF THE DRAWINGS

The present invention is illustrated by way of example, and not by way of limitation, in the figures of the accompanying drawings and in which like reference numerals refer to similar elements and in which:
FIG. 1 is a diagram that illustrates a visual representation of ECA information in a database and interactions between such information, according to an embodiment;
FIG. 2 is a flow diagram that illustrates a method for managing Event-Condition-Action expressions in a database, according to an embodiment; and
FIG. 3 is a block diagram that illustrates a computer system upon which an embodiment of the invention may be implemented.

### DETAILED DESCRIPTION

Techniques are described for managing expressions in a database system. More specifically, techniques are described for managing event-condition-action expressions in a database system, via a database-enabled rules engine.

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

### OVERVIEW

Use of a database-enabled, or database-centric, rules engine includes receiving and storing ECA expressions in the database. Such expressions specify (1) an event structure that defines an event that corresponds with the event structure; (2) conditions for evaluation in response to and with respect to occurrences of events, e.g., event instances, that correspond with the event structure; and (3) actions for performance in response to events satisfying one or more of the conditions.

Such conditions are stored in columns of a database table, such as EXPRESSION data type columns. Hence, during a rule run-time database session, i.e., a database session in which the rules are evaluated with respect to one or more events, an event is detected when an event occurs that complies with the specified event structure and the conditions are evaluated by determining whether the event satisfies any of the conditions. If the event satisfies a set of one or more conditions that have a corresponding action, then the corresponding action is performed by the database server or the database server causes the action to be performed outside of the database system.

The rules engine described herein departs from the existing rules engines by managing ECA rules in a relational database. Consequently, advantages such as scalability, reliability, and security are easily extended to rules processing, such as the processing of business rules. In addition, the events for which the rules are defined are relational in nature and a subset of the standard structured query language (SQL) can be used to identify the occurrence of interesting events and to evaluate conditions against the event occurrences. Furthermore, the rich SQL language, for example, in combination with XML, can be used to represent complex business rules.

### STORAGE OF EVENT-CONDITION-ACTION RULES IN A DATABASE

In one aspect, rules are represented as expressions that are stored in a database as a rule set. In the context of ECA rules, rules comprise (1) an event structure that defines events that correspond with the event structure, (2) conditions against which corresponding events are evaluated, and (3) action preferences for performing in response to satisfaction of conditions by events.

With a database-enabled rules engine as described, the SQL query language can be used as the foundation for the rule language. Hence, expressions can be represented as SQL queries. Simple rule conditions are similar to the WHERE clause of a query in which the FROM clause represents the corresponding event structure. For example, if a FlightInfo table stores information about reserved flight information for all the customers of a travel agent, then the following query can identify all the customers with flight reservations to Orlando on United Airlines.

```
SELECT CustId FROM FlightInfo
WHERE ToCity = 'Orlando' and Airline ='United'
```

The above query identifies all the existing reservations to Orlando on United Airlines, that are stored in the table FlightInfo. However, if there is a requirement to identify only the new reservation as they are made (e.g., in real-time), the above query should be mapped to a rule that can monitor new data (e.g., events). In this case, the FlightInfo table can be configured as the event structure for the rule, or the event structure can be configured to work with transient application data using an object type with a matching structure. The WHERE clause of the above query can be used for the rule condition and the rule action can be some application logic to perform an action when a reservation matches this rule. For example, the action may be to offer a rental car promotion, offer a discount, and the like.

With SQL forming the foundation for the rule language, adding new rules and updating or deleting existing rules in a rule set can be performed using INSERT, UPDATE and DELETE operations on a corresponding rule set table. Furthermore, a simple SELECT operation on the rule set table allows the user to browse the rules in a rule set.

### EVENT STRUCTURE

The event structure describes, on an abstract level, the essential factors that unambiguously identify the occurrence of an event of that type. In one embodiment, the event structure is defined with a set of attributes that describe the specific features of an event, such as a business event, and the event structure is represented as an object type in the database. For example, a business event can capture the flight information that is added to a user's itinerary. In the database, the corresponding event structure can be represented as an object type as specified below.

| | |
|---|---|
| CREATE or REPLACE TYPE AddFlight AS OBJECT ( | |
| CustId | NUMBER, |
| Airline | VARCHAR(20), |
| FromCity | VARCHAR(30), |
| ToCity | VARCHAR(30), |
| Depart | DATE, |
| Return | DATE). |

In another embodiment, the rules are defined for data that is stored in relational tables in the database. In this scenario, the event structure for the rule set is derived from the structure of the tables that store the data, and an event is identified as a change in the state of the data (e.g., via INSERT or UPDATE operations).

A set of rules defined for a particular application is considered a rule set and the rules that make up the rule set share a common event structure(s) for their conditions. A rule set is captured as a relational table in a database, where a rule belonging to a rule set is a row in the rule set table.

### Composite Events

A composite event can be defined in the database as a combination of multiple primitive events. The rules defined for primitive events and composite events have similar operational characteristics in the database. In one embodiment, a composite event structure is represented as an object type with embedded types. Each embedded type in a composite event represents a primitive event. Each primitive event that is associated with a composite event can occur in a process independent of another process in which another associated primitive event occurs.

In an embodiment, the rules defined for composite events are evaluated incrementally as some parts of the event (e.g., one or more primitive events) occur. The results from the incremental evaluation of related primitive events are stored persistently in the database.

### CONDITIONS

The rule conditions against which events are evaluated are expressed using the variables defined in the corresponding event structure. For example, simple rule conditions are similar to the WHERE clause of a query in which the FROM clause represents the corresponding event structure. In a typical system based on rules, efficient filtering of a large set of conditions is critical for the scalability of the system. Unlike a typical database design, where a few queries are executed on a large set of rows in a table, a rules-based system may have a large number of conditions with respect to which an event is evaluated. Therefore, unique approaches to storing and manipulating conditions in a database-enabled rules engine are desirable, such as use of an EXPRESSION data type, described hereafter.

### EXPRESSION Data Type

In an embodiment, the rule condition column of the rule set table is configured with the Expression data type described in U.S. Patent Application No. 10/254,383 entitled "Managing Expressions In A Database System" and published as US-2003-0212670-A1.

For example, conditions can be stored in a VARCHAR2 or a CLOB column in a database table. Such a column can be structured as a column of EXPRESSION data type by, for example, associating some metadata to the column. Furthermore, the column storing the conditions is associated with the related event structure. A VARCHAR2 or a CLOB column associated with an event structure constitutes an EXPRESSION column. The values stored in an EXPRESSION column are initially expected to adhere to SQL-WHERE clause format. These conditions can refer to all the attributes defined in the corresponding event structure, along with any system variables and user-defined functions that are valid in the user environment.

### Conditions for Composite Events

Rules defined for a composite event consisting of two or more primitive events can be mapped to an equivalent join query. For example, assuming the reserved flight information and rental car information of the customers are stored in two tables, FlightInfo and CarInfo, respectively, a rule with conditions relating to a flight reservation as well as a rental car reservation (in order to offer a promotion at a hotel) can be mapped to an equivalent example SQL query shown below.

```
SELECT Flt.CustId FROM Flightlnfo Flt, CarInfo Car
        WHERE Flt.ToCity ='Orlando'and Flt.Airline ='United'and
            Flt.CustId = Car.CustId and Car.CarType = 'Luxury'
```

### XML-Extended SQL Syntax

The rules, however, may have unique requirements with respect to when the data pertaining to each primitive event is available and the related need for including the time of primitive event creation in the rule definition. Thus, in an embodiment, the WHERE clause of an equivalent join query is broken into separate conditions on the primitive events, with a join condition. These pieces are then used to represent a complex rule condition using some XML tags within a SQL condition. For example, the WHERE clause of the above rule maps to the following rule condition.

```
<condition>
         <and join="Flt.CustId = Car.CustId">
          <object name="Flt"> Airline-United' and ToCity='Orlando' </object>
           <object name="Car"> CarType ='Luxury' </object>
         </and>
        </condition>
```

Hence, each table in the FROM clause of the equivalent query maps to a primitive event and the combination of these primitive events represents the composite event for the rule set. Using this XML-extended SQL syntax, embodiments can be implemented to support temporal, negation, any, and sequencing semantics in the rule conditions, which is not possible with conventional SQL WHERE clause syntax. These semantics are described hereafter.

### Temporal Events

Rules involving temporal events are activated when an event is detected or not detected within a specified timeframe. An example of a rule involving temporal events is as follows: if an order is placed by a Gold customer and the ordered items are shipped within 12 hours of the order placement, then increment quality of service statistics. Such rules can be specified to use the timestamp variable that is implicitly included in each primitive event, such as the SQL date datatype.

An example of a statement that represents the foregoing rule may be formed as follows.

```
ON
           PlaceOrder(OrderId, ItemId, CustType, ..) order,
            ShipOrder (OrderId, TrackingNo, ..) ship
        IF
           <condition>
              <and join= "order.OrderId = ship.OrderId and
                      ship.rlm$crttime - order.rlm$crttime < 1/2">
               <object name="order"> CustType = 'Gold' </object>
               <object name="ship"/>
              </and>
             </condition>
        THEN
             IncrementQOSStats(ship.rlm$crttime - order.rlm$crttime)
```

### Negation

Rule conditions using negation can be specified using the XML-extended SQL syntax, where the actions that are associated with conditions using negation constructs are performed when an event is not detected within a specified timeframe. Such rules are often used to raise exceptions in event-based applications. An example of a rule involving negation is as follows: if an order is placed by a Gold customer and the ordered items are not shipped within 24 hours of the order placement, then notify customer service.

An example of a statement that represents the foregoing rule may be formed as follows.

```
 ON
           PlaceOrder(OrderId, ItemId, CustType, ..) order,
           ShipOrder (OrderId, TrackingNo, ..) ship
       IF
           <condition>
             <and join= "order.OrderId = ship.OrderId">
              <object name="order"> CustType = 'Gold' </object>
              <not by="sysdate+1">
                <object name="ship"/>
              </not>
             </and>
            </condition>
       THEN
            AlertRepresentative(OrderId, '123', 'Delayed Order')
```

The "not" element in the foregoing condition is activated only when the other primitive event(s) (e.g., order by Gold customer) is detected. If the object within the "not" element is detected within the specified timeframe, then the action is not executed.

### Any n

Rule conditions using "any *n*" can be specified using the XML-extended SQL syntax, where the actions that are associated with conditions using such constructs are performed when any *n* events of the specified events are detected. An example of a rule involving "any n" is as follows: if a customer adds two of the following items to a shopping cart, then suggest a tripod to the customer: a camcorder lens worth more than $100, a lens filter, and an IR light.

An example of a statement that represents the foregoing rule may be formed as follows.

```
ON
           AddItem (ItemId, Accessory, Price, ..) Item1,
           AddItem (ItemId, Accessory, Price, ..) Item2,
           AddItem (ItemId, Accessory, Price, ..) Item3
       IF
           <condition>
             <any count=2>
               <obj ect name="Item1">
                      Accessory = 'Lens' and Price > 100 </object>
              <object name="Item2"> Accessory = 'Lens Filter' </object>
              <object name="Item3"> Accessory = 'IR Light' </object>
             </any>
           </condition>
       THEN
            SuggestItem('Tripod')
```

### Sequencing

Rule conditions having sequencing requirements can be specified using the XML-extended SQL syntax, where the actions that are associated with conditions using such constructs are performed when the specified events are detected in a specified order, or sequence. An example of a rule involving sequencing is as follows: if a customer adds the following items to a shopping cart in the specified order, then suggest a tripod to the customer: a camcorder lens worth more than $100, a lens filter, and an IR light.

An example of a statement that represents the foregoing rule may be formed as follows.

```
ON
           AddItem (ItemId, Accessory, Price,..) Item1,
           AddItem (ItemId, Accessory, Price,..) Item2,
           AddItem (ItemId, Accessory, Price, ..) Item3
       IF
           <condition>
             <and sequence="yes">
              <object name="Item1">
                      Accessory = 'Lens' and Price > 100 </object>
              <object name="Item2"> Accessory = 'Lens Filter' </object>
              <object name="Item3"> Accessory = 'IR Light' </object>
             </any>
           </condition>
       THEN
            SuggestItem('Tripod')
```

### ACTIONS

The action associated with an ECA rule could be any operation that can be performed or initiated by a database server. For example, this includes sending an e-mail, scheduling a job for a later execution, modifying data stored in other relational tables, as well as generation of a new business event. Each rule definition includes a set of action preferences that are used to determine and perform the appropriate action. For example, the action preferences could be a set of scalar values (e.g., email-address) that will be passed to a fixed function that carries the action, or a set of SQL or PL/SQL commands (e.g., an INSERT statement) that is executed when the rule condition is satisfied (e.g., evaluates to true). The exact list of action preferences for a rule set are specified at the time of rule set creation.

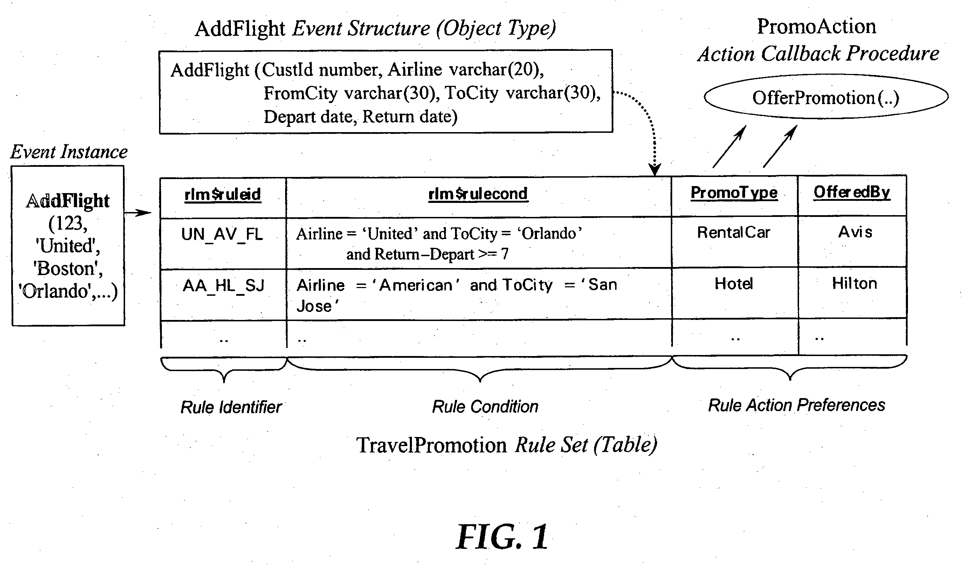

FIG. 1 is a diagram that illustrates a visual representation of ECA information in a database and interactions between such information, according to an embodiment. The functionality of the database-enabled rules engine described herein is centered around the concept of a rule set, which is captured in a relational database table that acts as a repository for rule definitions.

FIG. 1 depicts an AddFlight event structure as an object type that defines an event instance that corresponds to the AddFlight event structure. As discussed, a rule set, which in an embodiment is represented as a set of SQL expressions, is stored in a database table, depicted as the TravelPromotion rule set table of FIG. 1. An ECA rule maps to a row in a rule set table. The table in which the rule set is stored has a rule identifier column, a rule condition column, and rule action preferences columns. As is depicted with the dashed line between the event structure and the rule condition column, the event structure is associated with the rule condition column of the rule set table, in that the rule conditions are specified using variables that are declared in the event structure. In other words, the event structure can be considered metadata for the rule condition column. Furthermore, the rule conditions are derived from attributes of the event structure to which the conditions apply.

FIG. 1 further depicts an event instance, AddFlight, that corresponds with the AddFlight event structure, being added to the database. The event instance has values for the attributes that are defined in the corresponding event structure. The event instance may be created, for example, in response to a business event, with the relevant event information instantiated as an object of the event structure object type. In response to the arrival of the event instance in the database, the rule conditions in the TravelPromotion rule set table are evaluated with respect to the attribute values contained in the event instance object to determine whether any of the conditions are satisfied.

If any conditions that have a corresponding actions in the rule action preferences column are satisfied by the event instance, then an action callback procedure, PromoAction, is executed to perform an action procedure, OfferPromotion, with appropriate values from the rule action preferences columns passed to the action procedure as arguments. An example of a statement that represents the foregoing rule may be formed as follows.

```
PROCEDURE PromoAction (
           rlm$event AddFlight,
           rlm$rule TravelPromotion%ROWTYPE) is
       BEGIN
           -- OfferPromotion is a PL/SQL procedure that performs
           -- the appropriate action --
             OfferPromotion (rlm$event.CustId,
                       rlm$rule.PromoType,
                       rlm$rule.OfferedBy);
       END.
```

The event structure, the rule set table and the action callback procedure are typically all created as part of a rule set creation process.

### EVALUATION OF RULE SETS

Once the rules are populated in a rule set, the rules can be evaluated for one or more events. A rule run-time session can be defined as a database session, from database connect to disconnect, in which one or more events are processed. In addition to the session oriented rule processing, immediate execution of actions for satisfied rules can be implemented using a callback mechanism. For example, the callback mechanism may be implemented as a PL/SQL procedure that is invoked for each satisfied condition. The rule action can be performed by this callback procedure using the action preferences associated with the condition and the event that satisfied the condition. In an embodiment, conflict resolution criteria are used to resolve conflicts among multiple conditions that are satisfied by an event, and are specified declaratively at the time of rule set creation through a rule set ordering property, described hereafter.

Testing every rule condition against every event occurrence is typically a linear time solution. When a large rule set is defined, this approach is not scalable for a high volume of data items. Processes used to evaluate rule sets, i.e., evaluate one or more conditions with respect to one or more event occurrences, may vary from implementation to implementation. One example of a process that may be used to evaluate conditions from a large rule set with respect to event occurrences is described in U.S. Patent Application No. 10/254,383 entitled "Managing Expressions In A Database System" and published as US-2003-0212670-A1.

The referenced process uses an indexing mechanism to evaluate a large set of conditions efficiently and, consequently, to quicken the evaluation of the rule set for a given one or more events. This index can be defined on a column of EXPRESSION data type, thus a query optimizer can determine the use of the index for the evaluation of a rule set, based on computational costs associated with usage of the index. In an implementation, persistent database objects are created to maintain the index for a rule set, where pre-processing the rule set at the time of index creation populates these database objects. Additionally, the information stored in these objects is maintained to reflect any changes to the rule set using DML operations on the table(s) storing the rules.

According to an embodiment, an Expression Filter is a set of PL/SQL packages and APIs used to manage rules, and to filter the conditions for a given event by matching criteria expressed in conditions with the given event, using SQL or some other query language query. The Expression Filter comprises two components: an EVALUATE operator and an Expression Filter Index type, which are described in US-2003-0212670-A1.

The Expression Filter index type can be used to create an index on any set of conditions stored in a database column of type VARCHAR2, CLOB or BFILE. However, use of another index type other than the foregoing, which may be used on conditions stored as data types, is contemplated and therefore within the scope of embodiments of the invention. The EVALUATE operator can be used to process the conditions stored in an EXPRESSION column. This operator can be used in the WHERE clause of a standard SQL statement to filter the conditions for events. The EVALUATE operator accepts the name of the column storing the conditions and a given data item, e.g., an event, as arguments and the EVALUATE operator internally uses the expression set metadata to evaluate expressions for data items passed in.

The query on the table in which conditions are stored can be extended to include multi-table joins and any other database query operations using GROUP BY clause, ORDER BY clause, HAVING clause, etc. In addition, filtering a set of conditions for a batch of events by joining the table in which conditions are stored with the table storing the event data being processed is contemplated.

Furthermore, since rule sets and the index structure objects, if applicable, are persistently stored in the database, memory constraints associated with the size of rule sets that are encountered in approaches that use main memory extensively, are not applicable to the present embodiments. By contrast, operations according to the present embodiments can store the necessary database blocks into a database buffer cache as they are needed.

### DATABASE VIEW

Within a rule session, the list of events processed and the list of matching conditions, along with associated action preferences, are accessible through a database view called the rule set results view. In an embodiment, the rule set results view is created at the time of rule set creation and allows for concurrent rule sessions to display the appropriate results for each respective session using the same view name.

The capability to present the rule session results in a view allows users to perform additional operations on the results, as a set, and thus identify a subset of the conditions for action execution. For example, if the events processed in a rule session match three different conditions that suggest 10%, 15%, and 20% discounts as respective action preferences, then a query on the rule set results view can identify the condition and event combination that offers the maximum discount. Hence, the rule set results view can be used to support complex conflict resolution criteria among matching conditions.

The results from the rule set results view can further be used to schedule actions outside the database. For example, events can be injected into the rules engine processing from an application server, the rule set results view can be queried to find all the matching conditions, and the results from this view can be used to schedule some action in the application server.

### RULE SET PROPERTIES

While managing and processing events added to the system, the database-enabled rules engine enforces various event management policies that vary from rule set to rule set. Such policies can be declaratively set at the time of rule set creation, and are applicable to all the rules in a given rule set.

### Consumption of Events

One event management policy that can be set is referred to as consumption. Use of a consumption policy allows specification of whether an event can be used for exclusive satisfaction of a single condition or for shared satisfaction of multiple conditions. If for only a single condition, then the event is "consumed" by a given condition that the event satisfies and, consequently, the associated event information is deleted from the database after such a determination is made. If, on the other hand, an event is not specified to be consumed upon satisfaction of a condition, then the event information is not deleted from the database and evaluation of conditions with respect to the event can continue.

### Duration of Events

One event management policy that can be set is referred to as duration. Use of a duration policy allows specification of the lifetime, or duration of, unconsumed primitive events. For example, a given primitive event may be specified to last until the end of the transaction in which the event occurred, or until the end of the database session in which the event occurred, before expiring. At expiration, the event information is deleted from the database and, therefore, no longer evaluated against relevant conditions. For another example, a given primitive event may be specified to last for a particular period of time.

### Ordering_of Rule Evaluation

One event management policy that can be set is referred to as ordering. Use of an ordering policy allows specification of an order in which rules (and, hence, the conditions corresponding to a given rule) are evaluated against primitive events that make up a composite event. Because a given primitive event could be constituent to more than one comnosite event that could satisfy more than one rule, an ordering policy may be used to specify a conflict resolution policy to avoid conflicts between actions associated with satisfied conditions of respective rules. In an embodiment, a SQL ORDER BY clause based on the event attributes and the action preferences is used to specify an ordering policy. In addition, an ordering policy can be used in conjunction with a consumption policy to avoid the satisfaction of multiple conditions with contradicting actions, because an event that satisfies a condition is deleted according to the consumption policy before it is evaluated, according to the ordering policy, against any more conditions that could potentially be satisfied by the event.

### MANAGING EXPRESSIONS IN A DATABASE SYSTEM

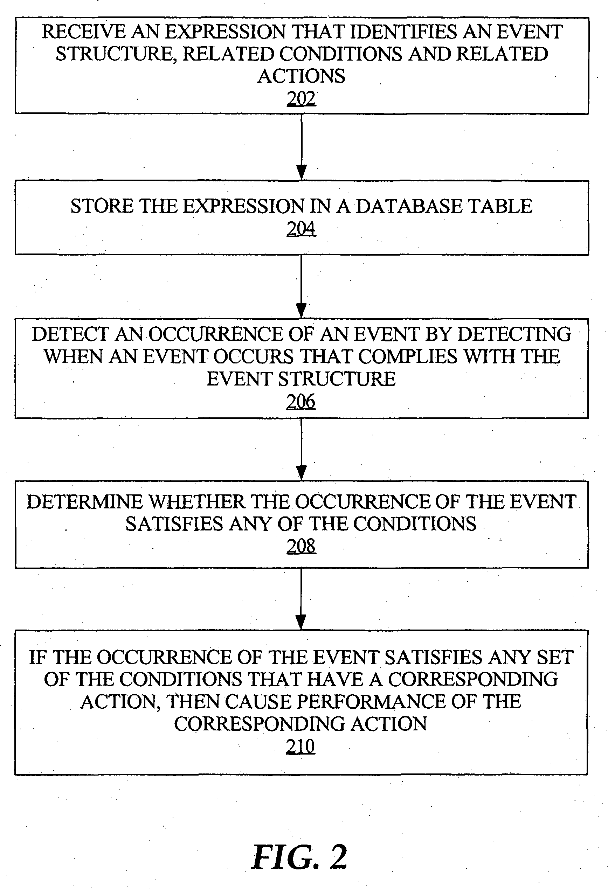

With reference to the foregoing description, FIG. 2 is a flow diagram that illustrates a method for managing Event-Condition-Action expressions in a database, according to an embodiment. The method of FIG. 2 is performed, for example, by one or more database servers that each govern and facilitate access to a particular database, processing requests by clients to access the database and manipulate data from the database.

At block 202, an expression is received that identifies an event structure, one or more related conditions and one or more related actions, each of which is previously described herein. For example, rules may be expressed in the following ECA (Event-Condition-Action) notation, or may be expressed in any other notation, such as in a standard SQL statement.

```
      ON <event structure>
      IF <condition>
      THEN <action>
```

At block 204, the expression is stored in one or more tables within the database, as illustrated in the example of FIG. 1. Hence, during a database session, referred to previously as a rule run-time database session, an occurrence of an event is detected when an event occurs that complies with the event structure, block 206. For example, when the event instance depicted in FIG. 1 is added to the database, the rules engine detects that this event instance corresponds to the particular event structure based on the attributes contained in the event instance. In scenarios in which the event structure is derived from the structure of the tables that store event data, then an event occurrence is detected as a change in the state of the data (e.g., via INSERT or UPDATE statements).

Further during the database session, at block 208, it is determined whether the event occurrence that was detected at block 206 satisfies any of the conditions that were specified in the expression that was stored in the database at block 204. Because the rules engine is already aware of the event structure to which the event occurrence corresponds, and the event structure is associated with the rule condition column, the rules engine can determine which conditions are to be evaluated with respect to the event occurrence.

At block 210, if the event occurrence satisfies any set of one or more rule conditions that have a corresponding action(s), then performance of the corresponding action(s) is caused. The action may be performed, or executed, solely within the database, or may be caused to execute outside of the database, such as by an application server. For example, execution of the action is triggered via an action callback procedure, as previously described.

Blocks 206-210 can be repeated, to process as many event occurrences as desired in a given database session. Multiple event occurrences may be grouped and processed in batch during a single session, or multiple event occurrences may be processed independently in separate sessions as the event occurrences are added to the database.

Blocks 206 and 208 can be repeated for each primitive event occurrence associated with a composite event structure, with results of each primitive event persistently stored in the database at least until all of the other sibling primitive events are processed or until the primitive event expires according to a rule set property, such as a duration policy. In a composite event scenario, once blocks 206 and 208 are completed for each primitive event associated with a composite event structure, then block 210 may be performed if applicable.

Because event-related data and rules on such data reside in the same repository, the techniques described herein provide for use of a database-enabled rules engine that processes rules on relational data without fetching the data into a middleware application that is configured in a computing layer between a client and the database. Hence, event-condition-action processing is more efficient than with middleware rules engines. Furthermore, because the database-enabled rules engine supports composite events and the persistent storage of incremental evaluation of conditions with respect to primitive events that make up a composite event, there is no restriction on the size of rule sets or the number of events that can be processed. Still further, unlike the memory-based middleware rules engines that require initialization and activation each time a rule set is loaded into memory, the rule sets used by the database-enabled rules engine are always active as long as the database is active, and ready to accept new rules and events.

### HARDWARE OVERVIEW

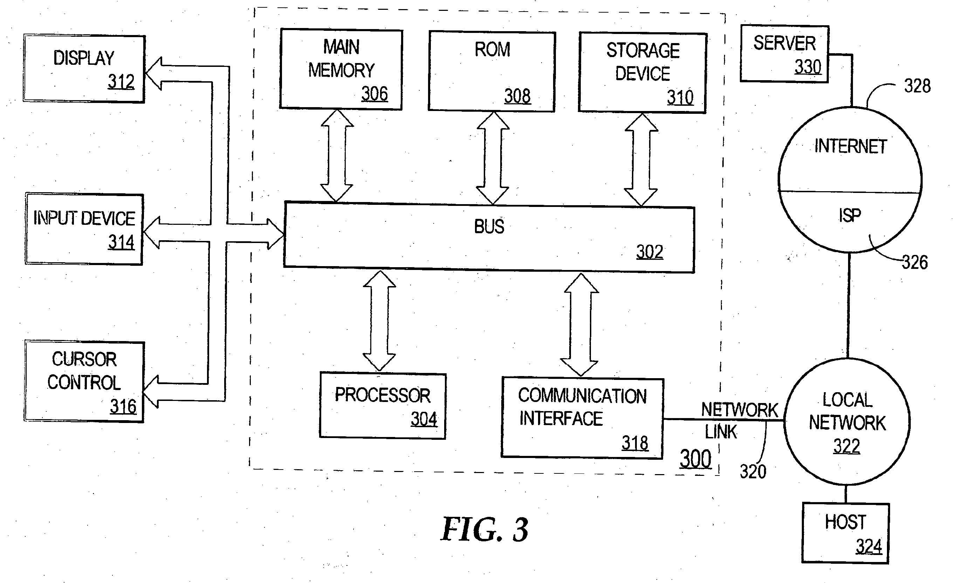

FIG. 3 is a block diagram that illustrates a computer system 300 upon which an embodiment of the invention may be implemented. Computer system 300 includes a bus 302 or other communication mechanism for communicating information, and a processor 304 coupled with bus 302 for processing information. Computer system 300 also includes a main memory 306, such as a random access memory (RAM) or other dynamic storage device, coupled to bus 302 for storing information and instructions to be executed by processor 304. Main memory 306 also may be used for storing temporary variables or other intermediate information during execution of instructions to be executed by processor 304. Computer system 300 further includes a read only memory (ROM) 308 or other static storage device coupled to bus 302 for storing static information and instructions for processor 304. A storage device 310, such as a magnetic disk, optical disk, or magneto-optical disk, is provided and coupled to bus 302 for storing information and instructions.

Computer system 300 may be coupled via bus 302 to a display 312, such as a cathode ray tube (CRT) or a liquid crystal display (LCD), for displaying information to a computer user. An input device 314, including alphanumeric and other keys, is coupled to bus 302 for communicating information and command selections to processor 304. Another type of user input device is cursor control 316, such as a mouse, a trackball, or cursor direction keys for communicating direction information and command selections to processor 304 and for controlling cursor movement on display 312. This input device typically has two degrees of freedom in two axes, a first axis (e.g., x) and a second axis (e.g., y), that allows the device to specify positions in a plane.

The invention is related to the use of computer system 300 for implementing the techniques described herein. According to one embodiment of the invention, those techniques are performed by computer system 300 in response to processor 304 executing one or more sequences of one or more instructions contained in main memory 306. Such instructions may be read into main memory 306 from another computer-readable medium, such as storage device 310. Execution of the sequences of instructions contained in main memory 306 causes processor 304 to perform the process steps described herein. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing instructions to processor 304 for execution. Such a medium may take many forms, including but not limited to, non-volatile media, volatile media, and transmission media. Non-volatile media includes, for example, optical, magnetic, or magneto-optical disks, such as storage device 310. Volatile media includes dynamic memory, such as main memory 306. Transmission media includes coaxial cables, copper wire and fiber optics, including the wires that comprise bus 302. Transmission media can also take the form of acoustic or light waves, such as those generated during radio-wave and infra-red data communications.

Common forms of computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 304 for execution. For example, the instructions may initially be carried on a magnetic disk of a remote computer. The remote computer can load the instructions into its dynamic memory and send the instructions over a telephone line using a modem. A modem local to computer system 300 can receive the data on the telephone line and use an infra-red transmitter to convert the data to an infra-red signal. An infra-red detector can receive the data carried in the infra-red signal and appropriate circuitry can place the data on bus 302. Bus 302 carries the data to main memory 306, from which processor 304 retrieves and executes the instructions. The instructions received by main memory 306 may optionally be stored on storage device 310 either before or after execution by processor 304.

Computer system 300 also includes a communication interface 318 coupled to bus 302. Communication interface 318 provides a two-way data communication coupling to a network link 320 that is connected to a local network 322. For example, communication interface 318 may be an integrated services digital network (ISDN) card or a modem to provide a data communication connection to a corresponding type of telephone line. As another example, communication interface 318 may be a local area network (LAN) card to provide a data communication connection to a compatible LAN. Wireless links may also be implemented. In any such implementation, communication interface 318 sends and receives electrical, electromagnetic or optical signals that carry digital data streams representing various types of information,

Network link 320 typically provides data communication through one or more networks to other data devices. For example, network link 320 may provide a connection through local network 322 to a host computer 324 or to data equipment operated by an Internet Service Provider (ISP) 326. ISP 326 in turn provides data communication services through the world wide packet data communication network now commonly referred to as the "Internet" 328. Local network 322 and Internet 328 both use electrical, electromagnetic or optical signals that carry digital data streams. The signals through the various networks and the signals on network link 320 and through communication interface 318, which cany the digital data to and from computer system 300, are exemplary forms of carrier waves transporting the information.

Computer system 300 can send messages and receive data, including program code, through the network(s), network link 320 and communication interface 318. In the Internet example, a server 330 might transmit a requested code for an application program through Internet 328, ISP 326, local network 322 and communication interface 318.

The received code may be executed by processor 304 as it is received, and/or stored in storage device 310, or other non-volatile storage for later execution. In this manner, computer system 300 may obtain application code in the form of a carrier wave.

### EXTENSIONS AND ALTERNATIVES

Alternative embodiments of the invention are described throughout the foregoing description, and in locations that best facilitate understanding the context of the embodiments. Furthermore, the invention has been described with reference to specific embodiments thereof. It will, however, be evident that various modifications and changes may be made thereto without departing from the scope of the invention, as defined by the claims. For example, implementations were presented in which SQL is used; however, the techniques described herein are not limited to use with SQL, for other data query languages may be applicable. Therefore, the specification and drawings are, accordingly, to be regarded in an illustrative rather than a restrictive sense.

In addition, in this description certain process steps are set forth in a particular order, and alphabetic and alphanumeric labels may be used to identify certain steps. Unless specifically stated in the description, embodiments of the invention are not necessarily limited to any particular order of carrying out such steps. In particular, the labels are used merely for convenient identification of steps, and are not intended to specify or require a particular order of carrying out such steps.

## Claims

1. A method for managing event-condition-action rules in a database system comprising one or more database servers, the method comprising the computer-implemented steps of:
the database system receiving (202) one or more database query language statements that specify an event-condition-action rule pertaining to a composite event structure that is associated with a plurality of primitive events, the event-condition-action rule comprising:
a set of one or more conditions against which said primitive events associated with said composite event structure are evaluated, and
one or more action preferences to be used for determining a corresponding action to be performed in response to occurrence of a composite event that (i) comprises the primitive events associated with said composite event structure and (ii) satisfies said set of one or more conditions, wherein at least one condition of the set of one or more conditions refers to information stored in at least two different tables within said database system;
storing (204) said event-condition-action rule within said database system;
during a database session at said one or more database servers of said database system, said one or more database servers incrementally evaluating the one or more conditions of said set of one or more conditions as one or more of the primitive events occur, the incremental evaluation comprising, for each primitive event occurrence associated with the composite event structure, performing:
detecting (206) the occurrence of a primitive event that is associated with said composite event structure, and
determining (208) whether said occurrence of said primitive event satisfies any condition of said set of one or more conditions, wherein results of said determining (208) for each primitive event are persistently stored in a database within said database system; and
if said occurrence of said primitive events associated with the composite event structure has been detected (206) and it has been determined (208) that said set of one or more conditions are satisfied, then the one or more database servers performing the corresponding action within the database system or causing (210) performance of the corresponding action outside of the database system.

2. The method of Claim 1, wherein said database system supports user-defined object types with embedded types for objects having the object type with one or more attributes each having one of the embedded types, and wherein said composite event structure is represented as a particular user-defined object type with embedded types in said database system, wherein each of said embedded types is an object type representing a primitive event structure.

3. The method of Claim 2, wherein each primitive event structure is defined with a set of attributes that describe the specific features of a primitive event that corresponds to said primitive event structure.

4. The method of Claim 2 or Claim 3,
wherein said detecting (206) comprises:
detecting an occurrence of a first primitive event of said primitive events by detecting when an event occurs that complies with a first primitive event structure of said composite event structure; and
detecting an occurrence of a second primitive event of said primitive events by detecting when an event occurs that complies with a second primitive event structure of said composite event structure;
wherein said determining (208) comprises:
determining whether said occurrence of said first primitive event satisfies any condition of said set of one or more conditions;
determining whether said occurrence of said second primitive event satisfies any condition of said set of one or more conditions,
determining whether any conditions of said set of one or more conditions are satisfied by both said occurrence of said first primitive event and said occurrence of said second primitive event.

5. The method of any of Claims 1-3, further comprising the computer-implemented steps of:
receiving information that specifies a period for which an occurrence of a first primitive event of said plurality of primitive events is valid before an occurrence of a second primitive event of said plurality of primitive events occurs; and
wherein said determining (208) comprises determining whether said occurrence of said first primitive event and said occurrence of said second primitive event satisfy any conditions of said set of one or more conditions in accordance with said information.

6. The method of any of Claims 1-5, further comprising the computer-implemented steps of:
receiving information that specifies an order in which to evaluate said conditions of said set of one or more conditions with respect to said primitive events; and
wherein said determining (208) comprises determining, in said order according to said information, whether said conditions are satisfied by said primitive events.

7. The method of Claim 1, wherein said receiving (202) comprises receiving a database query language statement that identifies a composite event structure derived from a structure of tables, in said database, that store data that represent event occurrences.

8. The method of Claim 7, wherein said detecting (206) comprises detecting that said data is changed.

9. The method of Claim 1, wherein said storing (204) comprises storing one or more conditions in a column of a table maintained by said database system.

10. The method of Claim 1, wherein said receiving (202) comprises receiving an expression that identifies a condition that is represented as a SQL query on said database.

11. The method of Claim 1, further comprising the computer-implemented step of:
receiving a modification, in the form of a SQL operation, to said one or more conditions of said database query language statement.

12. The method of Claim 1, further comprising the computer-implemented step of:
during a database session, providing access to a database view that comprises
a list of event occurrences that have been determined to satisfy any of said conditions,
a list of conditions that have been satisfied by event occurrences in said list of event occurrences, and
a list of actions that correspond with conditions in said list of conditions.

13. The method of Claim 12, further comprising the computer-implemented step of:
in response to a request from a user of said database system, performing an operation on said view.

14. The method of Claim 13, wherein performing an operation comprises performing an operation to resolve a conflict among two or more conditions that have been satisfied by event occurrences in said list of event occurrences.

15. The method of Claim 13, wherein performing an operation comprises performing an operation that includes scheduling an action for performance outside of said database system.

16. The method of Claim 1, further comprising the computer-implemented steps of:
receiving information that specifies that the step of determining (208) is to stop when determining that said occurrence of said event satisfies said set of one or more conditions; and
stopping determining whether said occurrence of said event satisfies any of said conditions when determining that said occurrence of said event satisfies said set of one or more conditions.

17. The method of Claim 1,
wherein said receiving (202) comprises receiving a database query language statement that identifies a temporal condition;
wherein said temporal condition specifies that said corresponding action is to be performed if a second condition from said set of conditions is satisfied by an occurrence of an event, within a particular time after a first condition from set of conditions is satisfied by an occurrence of an event; and
wherein said determining (208) comprises determining whether occurrences of events satisfy said first and second conditions in accordance with said temporal condition.

18. The method of Claim 1,
wherein said receiving (202) comprises receiving a database query language statement that identifies a negation condition;
wherein said negation condition specifies that said corresponding action is to be performed if a second condition from said set of conditions is not satisfied by an occurrence of an event within a particular time after a first condition from set of conditions is satisfied by an occurrence of an event; and
wherein said determining (208) comprises determining whether occurrences of events satisfy said first and second conditions in accordance with said negation condition.

19. The method of Claim 1,
wherein said receiving (202) comprises receiving a database query language statement that identifies a group of conditions that, when a particular number of conditions from said group of conditions is satisfied by one or more occurrences of events, triggers performance of said corresponding action;
wherein said particular number is less than a number of conditions in said group of conditions; and
wherein said determining (208) comprises determining whether one or more occurrences of events satisfy said particular number of conditions from said group of conditions.

20. The method of Claim 1,
wherein said receiving (202) comprises receiving a database query language statement that identifies a group of sequenced conditions;
wherein said group of sequenced conditions specifies that said corresponding action is to be performed if said conditions from said group of sequenced conditions are satisfied in a particular sequence by one or more occurrences of events; and
wherein said determining (208) comprises determining whether one or more occurrences of events satisfy said conditions from said group of sequenced conditions in said particular sequence.

21. The method of Claim 1, wherein each primitive event corresponds to a primitive event structure that is defined with a set of attributes that describe specific features of the primitive event, and wherein all attributes defined in the set of primitive event structures that correspond to the composite event structure are available to be referred to in said set of one or more conditions.

22. The method of any of Claims 1-21, wherein the one or more database query language statements further specify at least one further event-condition-action rule pertaining to said composite event structure.

23. A computer-readable medium carrying one or more sequences of instructions which, when executed by one or more processors (304), causes the one or more processors (304) to perform the steps recited in any of Claims 1-22.

24. A system comprising means adapted to perform the steps recited in any of Claims 1-22.

## Patentansprüche

1. Verfahren zum Handhaben von Ereignis-Bedingungs-Aktions-Regeln in einem Datenbanksystem, das einen oder mehrere Datenbankserver aufweist, wobei das Verfahren die computerimplementierten Schritte umfasst:
das Datenbanksystem erhält (202) eine oder mehrere Anweisungen einer Datenbankabfragesprache, die eine Ereignis-Bedingungs-Aktions-Regel angeben, welche eine zusammengesetzte Ereignisstruktur betrifft, die mit einer Mehrzahl von primitiven Ereignissen in Beziehung steht, wobei die Ereignis-Bedingungs-Aktions-Regel umfasst:
einen Satz einer oder mehrerer Bedingungen, bezüglich derer die primitiven Ereignisse, die mit der zusammengesetzten Ereignisstruktur in Beziehung stehen, ausgewertet werden, und
eine oder mehrere Aktionspräferenzen, die verwendet werden sollen, um eine entsprechende Aktion zu bestimmen, die ansprechend auf das Auftreten eines zusammengesetzten Ereignisses ausgeführt werden soll, welches (i) die primitiven Ereignisse aufweist, die in Beziehung mit der zusammengesetzten Ereignisstruktur stehen, und (ii) den Satz einer oder mehrerer Bedingungen erfüllt, wobei sich zumindest eine Bedingung des Satzes einer oder mehrerer Bedingungen auf Informationen bezieht, die in mindestens zwei unterschiedlichen Tabellen in dem Datenbanksystem gespeichert sind;
Speichern (204) der Ereignis-Bedingungs-Aktions-Regel in dem Datenbanksystem;
während einer Datenbanksitzung bei dem einen oder den mehreren Datenbankservern des Datenbanksystems wertet/werten der eine oder die mehreren Datenbankserver die eine oder die mehreren Bedingungen des Satzes einer oder mehrerer Bedingungen schrittweise aus, wenn ein oder mehrere der primitiven Ereignisse stattfinden, wobei die schrittweise Auswertung umfasst, dass für jedes Auftreten eines primitiven Ereignisses, das in Beziehung mit der zusammengesetzten Ereignisstruktur steht, ausgeführt wird:
Erkennen (206) des Auftretens eines primitiven Ereignisses, das in Beziehung mit der zusammengesetzten Ereignisstruktur steht, und
Bestimmen (208), ob das Auftreten des primitiven Ereignisses irgendeine Bedingung des Satzes einer oder mehrerer Bedingungen erfüllt, wobei Ergebnisse dieses Bestimmens (208) für jedes primitive Ereignis dauerhaft in einer Datenbank in dem Datenbanksystem gespeichert werden; und
wenn das Auftreten der primitiven Ereignisse, die in Beziehung mit der zusammengesetzten Ereignisstruktur stehen, erkannt (206) worden ist und es bestimmt (208) worden ist, dass der Satz einer oder mehrerer Bedingungen erfüllt ist, dann führt/führen der eine oder die mehreren Datenbankserver die entsprechende Aktion in dem Datenbanksystem aus oder veranlassen (210) eine Ausführung der entsprechenden Aktion außerhalb des Datenbanksystems.

2. Verfahren nach Anspruch 1, bei dem das Datenbanksystem benutzerdefinierte Objekttypen mit eingebetteten Typen für Objekte des Objekttyps mit einem oder mehreren Attributen, die jeweils einen der eingebetteten Typen aufweisen, unterstützt, und bei dem die zusammengesetzte Ereignisstruktur in dem Datenbanksystem als ein bestimmter benutzerdefinierter Objekttyp mit eingebetteten Typen dargestellt wird, wobei jeder der eingebetteten Typen ein Objekttyp ist, der eine primitive Ereignisstruktur darstellt.

3. Verfahren nach Anspruch 2, bei dem jede primitive Ereignisstruktur mit einem Satz von Attributen definiert ist, die die bestimmten Merkmale eines primitiven Ereignisses beschreiben, welches der primitiven Ereignisstruktur entspricht.

4. Verfahren nach Anspruch 2 oder Anspruch 3,
wobei das Erkennen (206) umfasst:
Erkennen eines Auftretens eines ersten primitiven Ereignisses der primitiven Ereignisse, indem erkannt wird, wenn ein Ereignis auftritt, das einer ersten primitiven Ereignisstruktur der zusammengesetzten Ereignisstruktur entspricht; und
Erkennen eines Auftretens eines zweiten primitiven Ereignisses der primitiven Ereignisse, indem erkannt wird, wenn ein Ereignis auftritt, das einer zweiten primitiven Ereignisstruktur der zusammengesetzten Ereignisstruktur entspricht;
wobei das Bestimmen (208) umfasst:
Bestimmen, ob das Auftreten des ersten primitiven Ereignisses irgendeine Bedingung des Satzes einer oder mehrerer Bedingungen erfüllt;
Bestimmen, ob das Auftreten des zweiten primitiven Ereignisses irgendeine Bedingung des Satzes einer oder mehrerer Bedingungen erfüllt,
Bestimmen, ob irgendwelche Bedingungen des Satzes einer oder mehrerer Bedingungen sowohl von dem Auftreten des ersten primitiven Ereignisses als auch von dem Auftreten des zweiten primitiven Ereignisses erfüllt werden.

5. Verfahren nach einem der Ansprüche 1-3, ferner die computerimplementierten Schritte umfassend:
Erhalten von Informationen, die eine Dauer angeben, während derer ein Auftreten eines ersten primitiven Ereignisses der Mehrzahl von primitiven Ereignissen gültig ist, bevor ein Auftreten eines zweiten primitiven Ereignisses der Mehrzahl von primitiven Ereignissen stattfindet; und
wobei das Bestimmen (208) umfasst, dass bestimmt wird, ob das Auftreten des ersten primitiven Ereignisses und das Auftreten des zweiten primitiven Ereignisses irgendwelche Bedingungen des Satzes einer oder mehrerer Bedingungen gemäß diesen Informationen erfüllt.

6. Verfahren nach einem der Ansprüche 1-5, ferner die computerimplementierten Schritte umfassend:
Erhalten von Informationen, die eine Reihenfolge angeben, in der die Bedingungen des Satzes einer oder mehrerer Bedingungen bezüglich der primitiven Ereignisse ausgewertet werden sollen; und
wobei das Bestimmen (208) umfasst, dass in der Reihenfolge gemäß den Informationen bestimmt wird, ob die Bedingungen von den primitiven Ereignissen erfüllt werden.

7. Verfahren nach Anspruch 1, bei dem das Erhalten (202) aufweist, dass eine Anweisung in einer Datenbankabfragesprache erhalten wird, die eine zusammengesetzte Ereignisstruktur bezeichnet, welche aus einer Struktur von Tabellen in der Datenbank abgeleitet ist, die Daten speichern, welche das Auftreten von Ereignissen darstellen.

8. Verfahren nach Anspruch 7, bei dem das Bestimmen (204) umfasst, dass bestimmt wird, dass sich die Daten geändert haben.

9. Verfahren nach Anspruch 1, bei dem das Speichern (204) umfasst, dass eine oder mehrere Bedingungen in einer Spalte einer von dem Datenbanksystem verwalteten Tabelle gespeichert werden.

10. Verfahren nach Anspruch 1, bei dem das Erhalten (202) umfasst, dass ein Ausdruck erhalten wird, der eine Bedingung angibt, welche als eine SQL-Anfrage bei der Datenbank dargestellt ist.

11. Verfahren nach Anspruch 1, ferner den computerimplementierten Schritt aufweisend:
Erhalten einer Änderung, in Gestalt einer SQL-Operation, an der einen oder den mehreren Bedingungen der Anweisung in der Datenbankabfragesprache.

12. Verfahren nach Anspruch 1, ferner den computerimplementierten Schritt umfassend:
während einer Datenbanksitzung wird Zugang zu einer Datenbanksicht bereitgestellt, die aufweist:
eine Liste des Auftretens von Ereignissen, für die bestimmt worden ist, dass sie irgendwelche der Bedingungen erfüllen,
eine Liste von Bedingungen, die von den aufgetretenen Ereignissen in der Liste des Auftretens von Ereignissen erfüllt worden sind, und
eine Liste von Aktionen, die Bedingungen in der Liste von Bedingungen entsprechen.

13. Verfahren nach Anspruch 12, ferner den computerimplementierten Schritt umfassend:
ansprechend auf eine Anforderung von einem Benutzer des Datenbanksystems wird ein Vorgang bezüglich der Sicht ausgeführt.

14. Verfahren nach Anspruch 13, bei dem das Ausführen eines Vorgangs umfasst, dass ein Vorgang ausgeführt wird, um einen Konflikt zwischen zwei oder mehreren Bedingungen aufzulösen, die von aufgetretenen Ereignissen in der Liste von aufgetretenen Ereignissen erfüllt worden sind.

15. Verfahren nach Anspruch 13, bei dem das Ausführen eines Vorgangs umfasst, dass ein Vorgang ausgeführt wird, der das Einplanen einer Aktion zur Ausführung außerhalb des Datenbanksystems aufweist.

16. Verfahren nach Anspruch 1, ferner die computerimplementierten Schritte umfassend:
Empfangen von Informationen, die angeben, dass der Schritt des Bestimmens (208) beendet werden soll, wenn bestimmt wird, dass das Auftreten des Ereignisses den Satz einer oder mehrerer Bedingungen erfüllt; und
Beenden der Bestimmung, ob das Auftreten des Ereignisses irgendwelche der Bedingungen erfüllt, wenn bestimmt wird, dass das Auftreten des Ereignisses den Satz einer oder mehrerer Bedingungen erfüllt.

17. Verfahren nach Anspruch 1,
wobei das Erhalten (202) umfasst, dass eine Anweisung in einer Datenbankabfragesprache erhalten wird, die eine zeitliche Bedingung angibt;
wobei die zeitliche Bedingung angibt, dass die entsprechende Aktion ausgeführt werden soll, wenn eine zweite Bedingung aus dem Satz von Bedingungen durch ein Auftreten eines Ereignisses erfüllt wird, und zwar innerhalb einer bestimmten Zeit, nachdem eine erste Bedingung aus dem Satz von Bedingungen durch ein Auftreten eines Ereignisses erfüllt worden ist; und
wobei das Bestimmen (208) umfasst, dass bestimmt wird, ob das Auftreten von Ereignissen die erste und die zweite Bedingung gemäß der zeitlichen Bedingung erfüllen.

18. Verfahren nach Anspruch 1,
wobei das Erhalten (202) umfasst, dass eine Anweisung in einer Datenbankabfragesprache erhalten wird, die eine Verneinungsbedingung angibt;
wobei die Verneinungsbedingung angibt, dass die entsprechende Aktion ausgeführt werden soll, wenn eine zweite Bedingung aus dem Satz von Bedingungen nicht durch ein Auftreten eines Ereignisses während einer bestimmten Zeit erfüllt wird, nachdem eine erste Bedingung aus dem Satz von Bedingungen durch ein Auftreten eines Ereignisses erfüllt worden ist; und
wobei das Bestimmen (208) umfasst, dass bestimmt wird, ob das Auftreten von Ereignissen die erste und die zweite Bedingung gemäß der Verneinungsbedingung erfüllt.

19. Verfahren nach Anspruch 1,
wobei das Erhalten (202) umfasst, dass eine Anweisung in einer Datenbankabfragesprache erhalten wird, die eine Gruppe von Bedingungen angibt, welche, wenn eine bestimmte Anzahl von Bedingungen aus der Gruppe von Bedingungen von einem oder mehreren Auftreten von Ereignissen erfüllt wird, die Ausführung der entsprechenden Aktion auslöst;
wobei die bestimmte Zahl kleiner als eine Anzahl von Bedingungen in der Gruppe von Bedingungen ist; und
wobei das Bestimmen (208) umfasst, dass bestimmt wird, ob ein oder mehrere aufgetretene Ereignisse die bestimmte Anzahl von Bedingungen aus der Gruppe von Bedingungen erfüllen.

20. Verfahren nach Anspruch 1,
wobei das Erhalten (202) umfasst, dass eine Anweisung in einer Datenbankabfragesprache erhalten wird, die eine Gruppe sequenziell angeordneter Bedingungen angibt;
wobei die Gruppe sequenziell angeordneter Bedingungen angibt, dass die entsprechende Aktion ausgeführt werden soll, wenn die Bedingungen aus der Gruppe sequenziell angeordneter Bedingungen in einer bestimmten Reihenfolge von einem oder mehreren aufgetretenen Ereignissen erfüllt werden; und
wobei das Bestimmen (208) umfasst, dass bestimmt wird, ob ein oder mehrere aufgetretene Ereignisse die Bedingungen aus der Gruppe sequenziell angeordneter Bedingungen in der bestimmten Reihenfolge erfüllen.

21. Verfahren nach Anspruch 1, bei dem jedes primitive Ereignis einer primitiven Ereignisstruktur entspricht, die mit einem Satz von Attributen definiert ist, welche bestimmte Merkmale des primitiven Ereignisses beschreiben, und bei dem alle Attribute, die in dem der zusammengesetzten Ereignisstruktur entsprechenden Satz primitiver Ereignisstrukturen definiert sind, für eine Bezugnahme in dem Satz einer oder mehrerer Bedingungen verfügbar sind.

22. Verfahren nach einem der Ansprüche 1-21, bei dem die eine oder mehreren Anweisungen in der Datenbankabfragesprache ferner mindestens eine weitere Ereignis-Bedingungs-Aktions-Regel angeben, die die zusammengesetzte Ereignisstruktur betrifft.

23. Computerlesbares Medium, das eine oder mehrere Befehlssequenzen beinhaltet, die, wenn sie von einem oder mehreren Prozessoren (304) ausgeführt wird/werden, den einen oder die mehreren Prozessoren (304) dazu veranlasst/veranlassen, die in einem der Ansprüche 1-22 genannten Schritte auszuführen.

24. System mit Mitteln, die zum Ausführen der Schritte nach einem der Ansprüche 1-22 eingerichtet sind.

## Revendications

1. Un procédé de gestion de règles d'événement-condition-action dans un système de base de données comprenant un ou plusieurs serveurs de base de données, le procédé comprenant les opérations mises en oeuvre par ordinateur suivantes :
la réception par le système de base de données (202) d'une ou de plusieurs instructions de langage d'interrogation de base de données qui spécifient une règle d'événement-condition-action relative à une structure d'événement composite qui est associée à une pluralité d'événements primitifs, la règle d'événement-condition-action comprenant :
un ensemble d'une ou de plusieurs conditions vis-à-vis desquelles lesdits événements primitifs associés à ladite structure d'événement composite sont évalués, et
une ou plusieurs préférences d'action à utiliser pour la détermination d'une action correspondante à exécuter en réponse à l'occurrence d'un événement composite qui (i) comprend les événements primitifs associés à ladite structure d'événement composite et (ii) satisfait ledit ensemble d'une ou de plusieurs conditions, au moins une condition de l'ensemble d'une ou de plusieurs conditions faisant référence à des informations conservées en mémoire dans au moins deux tables différentes à l'intérieur dudit système de base de données,
la conservation en mémoire (204) de ladite règle d'événement-condition-action à l'intérieur dudit système de base de données,
au cours d'une session de base de données sur lesdits un ou plusieurs serveurs de base de données dudit système de base de données, l'évaluation incrémentale par lesdits un ou plusieurs serveurs de base de données des une ou plusieurs conditions dudit ensemble d'une ou de plusieurs conditions lorsqu'un ou plusieurs des événements primitifs se produisent, l'évaluation incrémentale comprenant, pour chaque occurrence d'événement primitif associé à la structure d'événement composite, l'exécution de :
la détection (206) de l'occurrence d'un événement primitif qui est associé à ladite structure d'événement composite, et
la détermination (208) si ladite occurrence dudit événement primitif satisfait une condition quelconque dudit ensemble d'une ou de plusieurs conditions, les résultats de ladite détermination (208) pour chaque événement primitif étant conservés en mémoire de manière durable dans une base de données à l'intérieur dudit système de base de données, et
si ladite occurrence desdits événements primitifs associés à la structure d'événement composite a été détectée (206) et qu'il a été déterminé (208) que ledit ensemble d'une ou de plusieurs conditions sont satisfaites, alors l'exécution par les un ou plusieurs serveurs de base de données de l'action correspondante à l'intérieur du système de base de données ou l'exécution (210) de l'action correspondante à l'extérieur du système de base de données.

2. Le procédé selon la Revendication 1, dans lequel ledit système de base de données prend en charge des types d'objet définis par l'utilisateur avec des types imbriqués pour des objets possédant le type d'objet avec un ou plusieurs attributs, chacun d'eux possédant un des types imbriqués, et dans lequel ladite structure d'événement composite est représentée sous la forme d'un type d'objet défini par l'utilisateur particulier avec des types imbriqués dans ledit système de base de données, chacun desdits types imbriqués étant un type d'objet représentant une structure d'événement primitif.

3. Le procédé selon la Revendication 2, dans lequel chaque structure d'événement primitif est définie avec un ensemble d'attributs qui décrivent les caractéristiques spécifiques d'un événement primitif qui correspond à ladite structure d'événement primitif.

4. Le procédé selon la Revendication 2 ou 3,
dans lequel ladite détection (206) comprend :
la détection d'une occurrence d'un premier événement primitif desdits événements primitifs par la détection du moment où un événement se produit qui est conforme à une première structure d'événement primitif de ladite structure d'événement composite, et
la détection d'une occurrence d'un deuxième événement primitif desdits événements primitifs par la détection du moment où un événement se produit qui est conforme à une deuxième structure d'événement primitif de ladite structure d'événement composite,
dans lequel ladite détermination (208) comprend :
la détermination si ladite occurrence dudit premier événement primitif satisfait une condition quelconque dudit ensemble d'une ou de plusieurs conditions,
la détermination si ladite occurrence dudit deuxième événement primitif satisfait une condition quelconque dudit ensemble d'une ou de plusieurs conditions,
la détermination si des conditions quelconques dudit ensemble d'une ou de plusieurs conditions sont satisfaites par à la fois ladite occurrence dudit premier événement primitif et ladite occurrence dudit deuxième événement primitif.

5. Le procédé selon l'une quelconque des Revendications 1 à 3, comprenant en outre les opérations mises en oeuvre par ordinateur suivantes :
la réception d'informations qui spécifient une période pendant laquelle une occurrence d'un premier événement primitif de ladite pluralité d'événements primitifs est valide avant qu'une occurrence d'un deuxième événement primitif de ladite pluralité d'événements primitifs ne se produise, et
dans lequel ladite détermination (208) comprend la détermination si ladite occurrence dudit premier événement primitif et ladite occurrence dudit deuxième événement primitif satisfont des conditions quelconques dudit ensemble d'une ou de plusieurs conditions conformément auxdites informations.

6. Le procédé selon l'une quelconque des Revendications 1 à 5, comprenant en outre les opérations mises en oeuvre par ordinateur suivantes :
la réception d'informations qui spécifient un ordre dans lequel évaluer lesdites conditions dudit ensemble d'une ou de plusieurs conditions par rapport auxdits événements primitifs, et
dans lequel ladite détermination (208) comprend la détermination, dans ledit ordre selon lesdites informations, si lesdites conditions sont satisfaites par lesdits événements primitifs.

7. Le procédé selon la Revendication 1, dans lequel ladite réception (202) comprend la réception d'une instruction de langage d'interrogation de base de données qui identifie une structure d'événement composite dérivée d'une structure de tables, dans ladite base de données, qui conservent en mémoire des données qui représentent des occurrences d'événements.

8. Le procédé selon la Revendication 7, dans lequel ladite détection (206) comprend la détection que lesdites données ont changé.

9. Le procédé selon la Revendication 1, dans lequel ladite conservation en mémoire (204) comprend la conservation en mémoire d'une ou de plusieurs conditions dans une colonne d'une table entretenue par ledit système de base de données.

10. Le procédé selon la Revendication 1, dans lequel ladite réception (202) comprend la réception d'une expression qui identifie une condition qui est représentée sous la forme d'une requête SQL vis-à-vis de ladite base de données.

11. Le procédé selon la Revendication 1, comprenant en outre l'opération mise en oeuvre par ordinateur suivante :
la réception d'une modification, sous la forme d'une opération SQL, auxdites une ou plusieurs conditions de ladite instruction de langage d'interrogation de base de données.

12. Le procédé selon la Revendication 1, comprenant en outre l'opération mise en oeuvre par ordinateur suivante :
au cours d'une session de base de données, la fourniture d'un accès à une vue de base de données qui comprend
une liste d'occurrences d'événements qui ont été déterminés satisfaire l'une quelconque desdites conditions,
une liste de conditions qui ont été satisfaites par des occurrences d'événements dans ladite liste d'occurrences d'événements, et
une liste d'actions qui correspondent à des conditions dans ladite liste de conditions.

13. Le procédé selon la Revendication 12, comprenant en outre l'opération mise en oeuvre par ordinateur suivante :
en réponse à une demande provenant d'un utilisateur dudit système de base de données, l'exécution d'une opération sur ladite vue.

14. Le procédé selon la Revendication 13, dans lequel l'exécution d'une opération comprend l'exécution d'une opération de résolution d'un conflit entre deux ou plus conditions qui ont été satisfaites par des occurrences d'événements dans ladite liste d'occurrences d'événements.

15. Le procédé selon la Revendication 13, dans lequel l'exécution d'une opération comprend l'exécution d'une opération qui comprend la planification d'une action destinée à être exécutée à l'extérieur dudit système de base de données.

16. Le procédé selon la Revendication 1, comprenant en outre les opérations mises en oeuvre par ordinateur suivantes :
la réception d'informations qui spécifient que l'opération de détermination (208) consiste à s'arrêter lorsque la détermination que ladite occurrence dudit événement satisfait ledit ensemble d'une ou de plusieurs conditions, et
l'arrêt de la détermination si ladite occurrence dudit événement satisfait l'une quelconque desdites conditions lorsque la détermination que ladite occurrence dudit événement satisfait ledit ensemble d'une ou de plusieurs conditions.

17. Le procédé selon la Revendication 1,
dans lequel ladite réception (202) comprend la réception d'une instruction de langage d'interrogation de base de données qui identifie une condition temporelle,
dans lequel ladite condition temporelle spécifie que ladite action correspondante est à exécuter si une deuxième condition dudit ensemble de conditions est satisfaite par une occurrence d'un événement, à l'intérieur d'un délai particulier après qu'une première condition de l'ensemble de conditions soit satisfaite par une occurrence d'un événement, et
dans lequel ladite détermination (208) comprend la détermination si des occurrences d'événements satisfont lesdits première et deuxième conditions conformément à ladite condition temporelle.

18. Le procédé selon la Revendication 1,
dans lequel ladite réception (202) comprend la réception d'une instruction de langage d'interrogation de base de données qui identifie une condition de négation,
dans lequel ladite condition de négation spécifie que ladite action correspondante est à exécuter si une deuxième condition dudit ensemble de conditions n'est pas satisfaite par une occurrence d'un événement à l'intérieur d'un délai particulier après qu'une première condition de l'ensemble de conditions soit satisfaite par une occurrence d'un événement, et
dans lequel ladite détermination (208) comprend la détermination si des occurrences d'événements satisfont lesdites première et deuxième conditions conformément à ladite condition de négation.

19. Le procédé selon la Revendication 1,
dans lequel ladite réception (202) comprend la réception d'une instruction de langage d'interrogation de base de données qui identifie un groupe de conditions qui, lorsqu'un nombre particulier de conditions dudit groupe de conditions sont satisfaites par une ou plusieurs occurrences d'événements, déclenche l'exécution de ladite action correspondante,
dans lequel ledit nombre particulier est inférieur à un nombre de conditions dans ledit groupe de conditions, et
dans lequel ladite détermination (208) comprend la détermination si une ou plusieurs occurrences d'événements satisfont ledit nombre particulier de conditions dudit groupe de conditions.

20. Le procédé selon la Revendication 1,
dans lequel ladite réception (202) comprend la réception d'une instruction de langage d'interrogation de base de données qui identifie un groupe de conditions séquencées,
dans lequel ledit groupe de conditions séquencées spécifie que ladite action correspondante est à exécuter si lesdites conditions dudit groupe de conditions séquencées sont satisfaites dans une séquence particulière par une ou plusieurs occurrences d'événements, et
dans lequel ladite détermination (208) comprend la détermination si une ou plusieurs occurrences d'événements satisfont lesdites conditions dudit groupe de conditions séquencées dans ladite séquence particulière.

21. Le procédé selon la Revendication 1, dans lequel chaque événement primitif correspond à une structure d'événement primitif qui est définie avec un ensemble d'attributs qui décrivent des caractéristiques spécifiques de l'événement primitif, et dans lequel tous les attributs définis dans l'ensemble de structures d'événements primitifs qui correspondent à la structure d'événement composite sont disponibles de façon à être mentionnés dans ledit ensemble d'une ou de plusieurs conditions.

22. Le procédé selon l'une quelconque des Revendications 1 à 21, dans lequel les une ou plusieurs instructions de langage d'interrogation de base de données spécifient en outre au moins une autre règle d'événement-condition-action relative à ladite structure d'événement composite.

23. Un support lisible par ordinateur contenant une ou plusieurs séquences d'instructions qui, lorsqu'elles sont exécutées par un ou plusieurs processeurs (304), amènent les un ou plusieurs processeurs (304) à exécuter les opérations décrites dans l'une quelconque des Revendications 1 à 22.

24. Un système comprenant un moyen d'exécution des opérations décrites dans l'une quelconque des Revendications 1 à 22.
